# EUROPEAN PATENT APPLICATION

(11) **EP 1 918 851 A2**
(43) Date of publication of application: **07.05.2008**
(21) Application number: 07254312.7
(22) Date of filing: 30.10.2007
(51) Int. Cl.: G06K 9/00, H04N 5/278

(54) **Video player**

(30) Priority: 01.11.2006 JP 2006297255
(71) Applicant: Hitachi, Ltd., Chiyoda-ku Tokyo 100-8280 (JP)
(72) Inventor: Hiramatsu, Yoshitaka, Chiyoda-ku Tokyo 100-8220 (JP); Sekimoto, Nobuhiro, Chiyoda-ku Tokyo 100-8220 (JP)
(74) Representative: Calderbank, Thomas Roger

(57) **Abstract**

A telop recognition method is provided which, during a telop recognition operation, can correct an error, if any, in the recognition operation without loading dictionaries of unnecessary character type into memory and which, when the telop recognition is performed again, does not have to initiate the telop recognition operation from the start. The telop area extraction unit (102) and the character extraction unit (103) are operated to generate character image data, which is temporarily stored. The dictionary data selection unit (106) selects dictionary data corresponding to a program category. By using the character image data and the dictionary data, a character recognition operation is executed to produce candidate character strings. The telop information generation unit (110) processes the candidate character strings to generate telop information.

## Description

The present invention relates to a video player and more particularly to a function to recognize telops in videos.

In this specification, a telop refers to captions and pictures superimposed on a video taken by a video camera and transmitted on television broadcasting.

As for the function to recognize a telop in a video, JP-A-2001-285716 for example describes that it aims to "provide a telop information processing device capable to detect and recognize a telop in a video highly accurately". As a units for achieving that object, JP-A-2001-285716 describes "a telop candidate image generation unit 1, a telop character string area candidate extraction unit 2, a telop character pixel extraction unit 3 and a telop character recognition unit 4 detect an area where a telop display in a video, extract only pixels to make up telop characters and recognize them by OCR(Optical Character Recognition), then a telop information generation unit 5 selects one recognition result from among two or more of them for one telop based on reliabilities obtained these units. The telop information generation unit 5 determines final telop information by using a extraction reliability on the telop character pixel extraction unit 3 or a recognition reliability of OCR on the telop character recognition unit 4, or both reliabilities."

The prior art disclosed in JP-A-2001-285716, however, has the following problem.

In JP-A-2001-285716, one dictionary is used for recognizing characters in a telop. This entails to search a relatively large database and copy the database on a memory.

Further, In JP-A-2001-285716, a result data processed by the telop information processing device records after executes a character recognition. Consequently, when a user changes the dictionary, it takes a time to obtain a result on character recognition because the telop information processing device execute the process from the beginning.

A kind of telops tends to be limited each television program. For example, in a television program of a professional baseball game, telops include players' names and baseball terms such as a homerun.

In the process for the telop character recognition, it takes particularly long time to process from the telop candidate image generation unit 1 to the telop character pixel extraction unit 3.

According to a first aspect of the present invention, there is provided a video player as set out in claim 1.

According to a second aspect of the present invention, there is provided a video player as set out in claim 5.

According to a third aspect of the present invention, there is provided a video player as set out in claim 6.

The video player of the present invention may change a dictionary for telop character recognition for each video program.

The video player may, in a process to recognize telop characters, record telop character images after the telop characters are extracted.

More specifically, the video player may have a program information acquisition unit to obtain program information and a dictionary data selection unit to select dictionary data by using the program information obtained by the program information acquisition unit. The dictionary data may have a character type dictionary used to recognize characters, a keyword dictionary used to extract a keyword from candidate character strings recognized by the character recognition units, and processing range data that indicates a range to recognize telop characters. The video player may also include a caption data acquisition unit to obtain caption data from a broadcast data acquisition device or a network sending/receiving device, and a keyword dictionary generating unit to extract a keyword using the obtained caption data and then record it as the keyword dictionary.

Further, the video player may also include a character image storage unit to store a character image extracted by the character extraction units. The character image storage unit may encode character images before storing them. The video player may also include a dictionary data acquisition unit to obtain dictionary data from the broadcast data acquisition device or the network sending/receiving device.

The video player of this invention may execute the telop character recognition with less load than in conventional video player. Consequently, a more convenient video player may be provided for the user.

Other objects, features and advantages of the invention will become apparent from the following description of the embodiments of the invention taken in conjunction with the accompanying drawings.

IN THE DRAWINGS:
Fig. 1 shows an example functional block diagram of a telop recognition unit.
Fig. 2 shows an example structure of dictionary data included in a dictionary database 105.
Fig. 3 shows an example procedure for generating a keyword dictionary each program category using captions.
Fig. 4A shows an example procedure for generating telop character image data on a telop recognition unit.
Fig. 4B shows an example procedure for generating telop information on a telop recognition unit.
Fig. 5 shows a check screen of a database selected by step 405.
Fig. 6 shows an example hardware configuration of a telop scene display device.
Fig. 7 shows an example procedure for displaying a telop scene.
Fig. 8 shows an example screen on a display device showing keywords included in telop information.
Fig. 9 shows an example screen in which, marks are displayed at each start time position corresponding to the selected keyword after user selects a keyword.
Fig. 10 shows an example screen in which, marks are displayed at each start time position corresponding to the selected keyword after user selects two or more keywords.

Now, a preferred embodiment implementing the present invention will be described. A video player of this invention may be applied, for example, to recorders with a built-in HDD, personal computers with an external television tuner or with a built-in tuner, TVs, cell phones and car navigation systems.

### (1) Hardware Configuration

A hardware configuration of the video player will be explained.

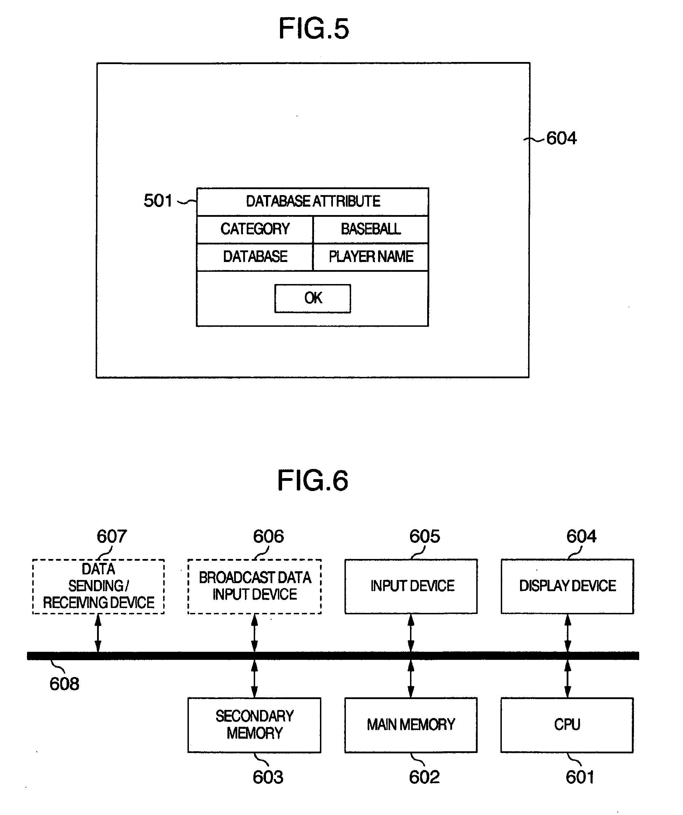

Fig. 6 shows an example hardware configuration of a telop scene display device as an example of the video player. The telop scene display device comprises a CPU 601, a main memory 602, an secondary memory 603, a display device 604 and an input device 605. For receiving broadcast data to obtain videos and an electronic TV program table, the telop scene display device further includes a broadcast data input device 606. If videos and an electronic TV program table are to be acquired through a network, the telop scene display device further includes a data sending/receiving device 607. These devices 601-607 are interconnected through a bus 608 for data transfer among them. The video player, however, does not need to have all of these devices.

The CPU 601 executes programs stored in the main memory 602 and the secondary memory 603.

The main memory 602 may be implemented for example, with a random access memory (RAM) or a read only memory (ROM). The main memory 602 stores programs to be executed by the CPU 601, data to be processed by the video player and video data.

The secondary memory 603 may be implemented, for example, with hard disk drives (HDDs), optical disc drives for Blue-ray discs and DVDs, magnetic disk drives for floppy (registered trademark) disks, or nonvolatile memories such as flash memories, or a combination of these. The secondary memory 603 stores software to be executed by the CPU 601, data to be processed by the video player and video data.

The display device 604 may be implemented, for example, a liquid crystal display, a plasma display or projector, on which displayed video data processed by the video player and display data indicating operation settings and a state of the video player.

The input device 605 may be implemented with a remote controller, a keyboard and a mouse. A user makes settings for recording and playback through this input device 605.

The broadcast data input device 606 may be implemented, for example with a tuner. It stores in the secondary memory 603 video data on the channel that the user has chosen from broadcast waves received on an antenna. If an electronic program guide is included in the broadcast waves received on an antenna, it extracts the electronic program guide and stores it in the secondary memory 603.

The network data sending/receiving device 607 may be implemented, for example, with a network card such as LAN card. It inputs video data and/or an electronic program guide from other devices connected to network and stores them in the secondary memory 603.

### (2) Functional Configuration

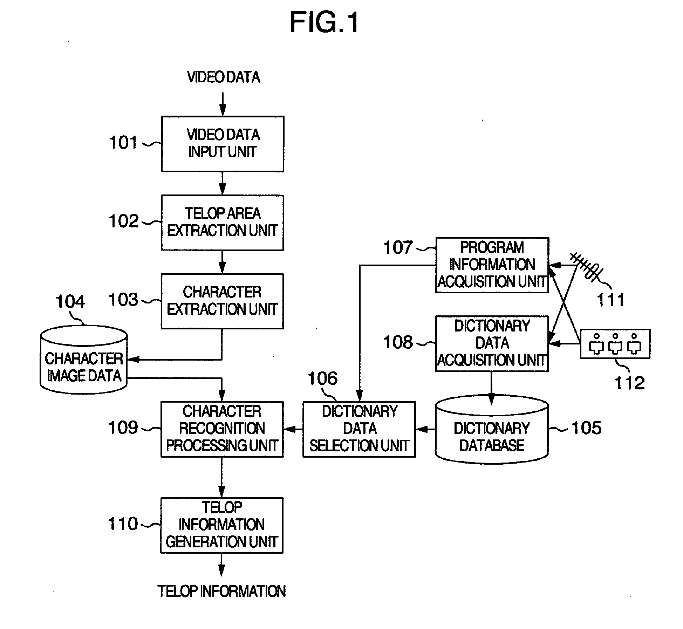

Fig. 1 shows an example functional block diagram of the telop character recognition unit in the video player. The functions of the telop character recognition unit may be implemented either with hardware or with software. A video is taken as an example of video for explanation. Here the following explanation assumes that the functions of the telop character recognition unit are implemented with software program to call up and executed by the CPU 601.

The telop character recognition unit comprises a video data input unit 101, a telop area extraction unit 102, a character extraction unit 103, a dictionary database 105, a dictionary data selection unit 106, a program information acquisition unit 107, a dictionary data acquisition unit 108, a character recognition processing unit 109 and a telop information generation unit 110.

The video data input unit 101 input video data from the secondary memory 603. A timing at which the video data input unit 101 is activated is when the user instructs an analysis after the recording is finished, when it gets to a time at which determined on scheduler not shown comes, or when video data input unit 101 found a video data which was not recognize telop information. It is also possible to activate the video data input unit 101 when the recording is started. In that case, the video data being recorded may be input.

The telop area extraction unit 102 specifies a pixel area to be determined on a telop, and then generate a cut image consisted of the pixel data. If the processing time and the amount of available memory are limited, instead of generating the cut image of the pixel area, the telop area extraction unit 102 may generate coordinate information on the pixel area. The method of specifying the pixel area determined on a telop may use known techniques disclosed in JP-A-9-322173, 10-154148 and 2001-285716. A method of determining times at which a telop appear and disappear may use a known technique described in David Crandall, Sameer Antani and Rangachar Kasturi, "Extraction of special effects caption text events from digital video", IJDAR (2003) 5: 138-157.

In the cut image consisted of the pixel area determined on a telop by the telop area extraction unit 102, the character extraction unit 103 specifies a pixel area to determine on characters, generates a cut image consisted of the character pixel area, and stores it as character image data 104. If an amount of capacity of secondary memory is not enough, the character extraction unit 103 encodes the image data by a run-length encoding used in facsimile and others or an entropy encoding and stores encoded data. The method of determining a character pixel area may employ known techniques disclosed in JP-A-2002-279433 and 2006-59124.

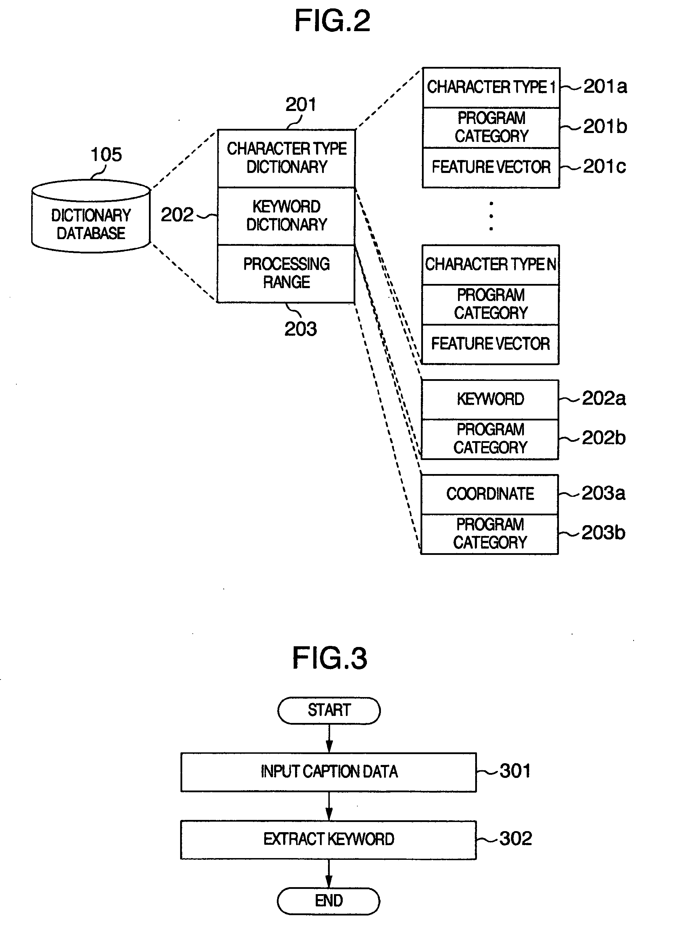

A architecture of the dictionary database 105 is shown in Fig. 2. Dictionary data in the dictionary database 105 comprises, for example, a character type dictionary 201, a keyword dictionary 202 and a processing range 203, which can be chosen for each program category.

The character type dictionary 201, as shown in Fig. 2, is comprised of a character type 201a, a program category 201b and a feature vector 201c. By corresponding a program category with each character type in this way, the video player can load only the character type dictionary used by the program category into the character recognition processing unit 109. The feature vector 201c uses a directional line-element feature commonly used in character recognition. The feature vector 201c is also used to classify the character type in the character recognition process.

The keyword dictionary 202, as shown in Fig. 2, is consisted of a keyword 202a and a program category 202b. The keyword dictionary 202 may be created from telop characters and/or caption data. A processing flow is shown in Fig. 3.

Fig. 3 shows an example process of extracting a keyword from caption data. First, caption data is input (step 301). Next, from the caption data a keyword is extracted (step 302). The extraction procedure involves to determine a word class of character strings in the caption data by using a morphological analysis and to extract string of the word class which is set each category as a keyword a character. The processing range 203 comprises a rectangular coordinate 203a indicating a range of character recognition processing and a program category 203b. In order to make the character type dictionary 201, keyword dictionary 202 and processing range 203 selectable for each program name and channel, the keyword dictionary 202 may have attributes of program name and channel.

The dictionary data selection unit 106 selects dictionary data from the dictionary database 105 based on the program information obtained by the program information acquisition unit 107 described later. Examples of program information include program names and program categories.

The program information acquisition unit 107 obtains program information such as program names and program categories from a broadcast data acquisition device 111 or a network sending/receiving device 112.

The dictionary data acquisition unit 108, if it is confirmed that a database on the Internet has been updated, at predetermined time intervals, obtains the database from the broadcast data acquisition device 111 or the network sending/receiving device 112, and then updates the existing database.

The character recognition processing unit 109 inputs the character image data 104, recognizes characters by using the character type dictionary 201 in the dictionary data selected by the dictionary data selection unit 106, and then obtains candidate character strings. If a user has set a keyword extraction mode, the character recognition processing unit 109 extracts a keyword that matches the keyword dictionary 202 from the candidate character strings. If data in the processing range 203 is included in the dictionary data, the character recognition processing unit 109 performs the character recognition processing only in that range. The character recognition processing uses the processing executed in the OCR device.

The telop information generation unit 110 determines an appearance, continuance and disappearance of the same telop by using the telop area coordinate information extracted by the telop area extraction unit 102 and the candidate character strings recognized by the character recognition processing unit 109, and then stores the times at which the telop appeared and disappeared.

### (3) Example of Telop Recognition Processing

Next, an example processing that the telop recognition unit executes will be explained.

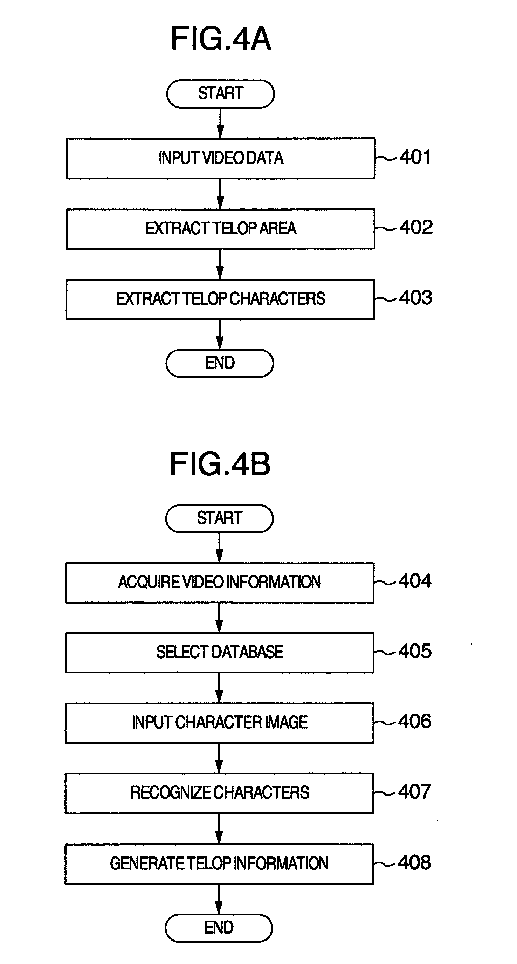

Fig. 4A is a flow chart showing an example procedure for generating telop character image data in the telop recognition unit.

The video data input unit 101 takes in video stored in a secondary memory not shown (step 401).

Next, the telop area extraction unit 102 determines a pixel area determined on a telop in the video data input at the step 401, and generates a cut image consisted of the telop pixel area (step 402).

Next, the character extraction unit 103 determines a pixel area determined on characters in the cut image generated at the step 102 and generates a cut image consisted of the character pixel area and stores it as character image data (step 403). By storing the image data consisted of the character pixel area as described above, the player can execute immediately the re-recognition processing for the telop characters following the processing of Fig. 4A. Because it takes time to extract(clip) a character area in the video on telop character recognition, storing the image data consisted of the character pixel area is particularly advantageous. The re-recognition may be required when the dictionary database has been updated (e.g., when names of professional baseball players are updated for a latest season) or when it is desired to recognize with a changed program category.

Fig. 4B is a flow chart showing an example procedure for generating telop information (information obtained by recognizing characters from the telop character image) in the telop recognition unit. With steps 401 to 403 performed on all frames of video data, the procedure shown in the flow chart is executed when the user instructs an analysis after the recording is finished, when it gets to a time at which determined on scheduler not shown comes, or when video data input unit 101 found a video data which was not recognize telop information. It is assumed that, before the procedure is executed, the dictionary data acquisition unit 108 obtains the dictionary data and stores them in the dictionary database 105.

First, the program information acquisition unit 107 obtains program information through the broadcast data acquisition device 111 or the network sending/receiving device 112 (step 404). It is noted, however, that if the program information is acquired when the video data is input (step 401), the step 404 is not executed.

Next, based on the program information acquired by the program information acquisition unit 107, the dictionary data selection unit 106 selects dictionary data from the dictionary database 105 (step 405). At this time, the player displays an attribute 501 where included in the selected database on the display device 604, as shown in Fig. 5. It is also possible to allow the user to choose a database. By selecting a dictionary database for each the program information as described above, the character recognition processing unit 109 can use a dictionary database appropriate for the program of interest and reduce an amount of dictionary data. Further, the character recognition processing unit 109 improves the accuracy or efficiency, by reducing comparison between feature vector. The dictionary data to be selected for each the program information includes, in the case of professional baseball game programs for example, names of players and terms of baseball game, such as homerun. The dictionary data may also include information on positions in which telops are likely to appear in a professional baseball game program. Further, it may also include information on pictures and past records of players.

Next, the character recognition processing unit 109 inputs the character image data 104 (step 406). If the character image data 104 was encoded, the character recognition processing unit 109 decodes the character image data 104.

Next, the character recognition processing unit 109 performs the character recognition processing in the input character image data by using the character type dictionary 201 included in the dictionary data selected at the step 405, and acquires candidate character strings (step 407). At this time, if a user set a keyword extraction mode for the character recognition processing 109, the character recognition processing unit 109 extracts a keyword that matches the keyword dictionary 202 from the candidate character strings. If the dictionary data selected by the step 405 includes the processing range 203, the character recognition processing unit 109 performs the character recognition processing in the processing range only.

Next, the telop information generation unit 110 determines an appearance, continuance and disappearance of the same telop by using the telop area coordinate information extracted at the step 402 and the candidate character strings recognized at the step 407, and then store the times at which the telop appeared and disappeared (step 408).

Although the above example is constructed to record the character image data at the step 403, it is possible to perform processing from the video data input (step 401) up to the telop information generation (step 408) without recording the character image data.

The database selected by the dictionary data selection unit may also be used by the telop area extraction unit 102. In that case, the telop area extraction unit 102 is operated in a range specified by the processing range 203 included in the database.

It is also possible to allow the database selected by the dictionary data selection unit to be used by the character extraction unit 103. In that case, the character extraction unit 103 is operated in a range specified by the processing range 203 included in the database.

### (4) Example Results of Recognition Processing

Next, processing to display a scene appeared a telop will be explained.

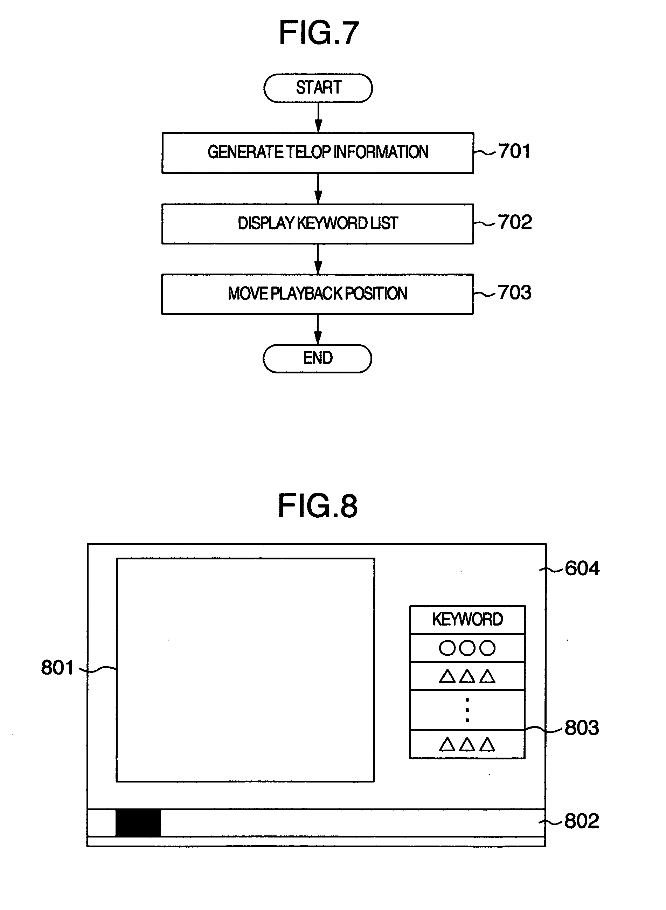

Fig. 7 is a flow chart showing an example procedure for displaying a scene appeared a telop.

First, a user set a keyword extraction mode for the character recognition processing unit 109 and the video player executes processing from the step 401 to the step 408 to generate telop information (step S701).

Next, when a user selects video data for playback, the video player shows a keyword on the display device 604 (step 702). Keywords are displayed, for example, with the predefined number of keyword and/or the order of frequency of appearance in the video. It is also possible to display the predefined number of keywords that match those preset by the user. Further, the predefined number of keywords that match those obtained from the Internet may be displayed. An example list of selected keywords displayed on a screen of a display device is shown in Fig. 8.

Fig. 8 shows an example configuration of the display device 604, which has a screen 801 in which to play a video and a seek bar 802 for specifying a display position. A keyword list 803 is shown by the side of the display screen. Instead of a selection of keyword from the user, the display device 604 may have the user input a keyword.

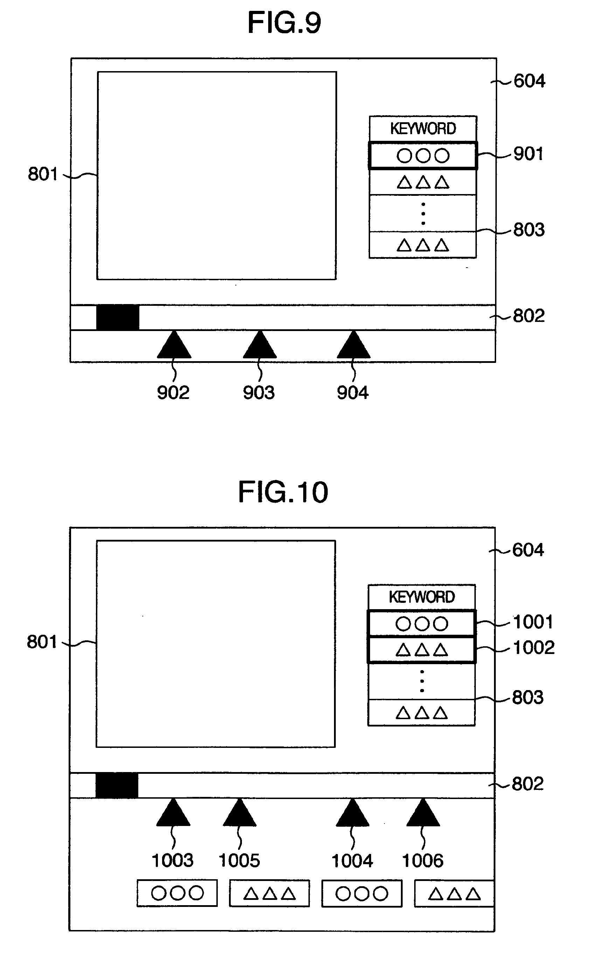

When a user selects a keyword, the playback position is moved to a start time corresponding to the keyword (step 703). At this time, if start times associated with the keyword are two or more, marks near the positions of the start times are displayed and the playback position is moved to the earliest start time. Displays showing marked positions of start times corresponding to the selected keywords are shown in Fig. 9 and Fig. 10.

Fig. 9 shows an example display in which, when a user selects a keyword, a frame is displayed at a position of a keyword 901 selected by the user on the display of Fig. 8 and marks 902, 903, 904 are displayed near the positions of the start times (in this case, three of them) corresponding to the keyword. It is also possible to display a selected keyword under the corresponding marks.

Fig. 10 shows an example in which, when a user selects two or more keywords (in this case, two of them), a frame indicating a selection is displayed near the position for each keywords 1101, 1002 selected by the user on the display of Fig. 8, and marks 1003, 1004 respectively are displayed at start time positions corresponding to the keyword 1001 (in this case, two of them), and marks 1005, 1006 respectively are displayed near start time positions corresponding to the keyword 1002 (in this case, two of them), the keywords are displayed under the associated marks. By displaying scenes chosen by keywords and the corresponding keywords, as shown in Fig. 9 and Fig. 10, the video player can show a explanation of selected scene for the user.

With the above embodiment, a telop recognition method and a telop scene display device can be provided which can reduce an amount of memory used in the recognition operation from that required by a conventional method and also reduce a processing time required by a re-recognition operation.

It should be further understood by those skilled in the art that although the foregoing description has been made on embodiments of the invention, the invention is not limited thereto and various changes and modifications may be made without departing from the spirit of the invention and the scope of the appended claims as interpreted by the description and drawings.

## Claims

1. A video player comprising:
an extraction unit (103) to extract a character image including characters from a video telop;
a recognition unit (109) to recognize characters in the extracted character image;
a video information acquisition unit (107, 108) to acquire video information representing a video type; and
a switching unit (106) to change a recognition operation performed by the recognition unit for each the video information acquired.

2. A video player according to claim 1, wherein the switching unit (106) changes dictionary data for the recognition operation.

3. A video player according to claim 1, wherein the video is a program and the video information is program information representing a genre or name of a program.

4. A video player according to claim 1, wherein, after the character image has been stored and then subjected to the recognition operation by the recognition unit (109), the re-recognition operation uses the stored character image.

5. A video player comprising:
an extraction unit (103) to extract a character image including characters from a video telop; and
a recognition unit (109) to recognize characters in the extracted character image;
wherein, after the character image has been stored and then subjected to a recognition operation by the recognition unit (109), when the recognition operation is performed again, the re-recognition operation uses the stored character image.

6. A video player comprising:
an extraction unit (103) to extract a character image including characters from a video telop;
a recognition unit (109) to recognize characters in the extracted character image; and
a scene selection unit to select from a video a scene in which predetermined characters are recognized by the recognition unit.

7. A video player according to claim 6, further including a display unit (604) to display a position in the video of the scene selected by the scene selection unit and the predetermined characters in a way that matches them to each other.

8. A video player according to claim 6, wherein the predetermined characters are characters specified by a user.
